(19) Europäisches Patentamt
European Patent Office
Office européen des brevets

(11) **EP 4 343 472 A1**

(12) **EUROPEAN PATENT APPLICATION**

(43) Date of publication:
**27.03.2024   Bulletin 2024/13**

(51) International Patent Classification (IPC):
***G05B 19/418*** (2006.01)

(21) Application number: **22196685.6**

(22) Date of filing: **20.09.2022**

(52) Cooperative Patent Classification (CPC):
**G05B 19/4184;** G05B 2219/32221;
G05B 2219/32222; G05B 2219/37224

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventors:
• **KOULIERAKIS, Eleftherios
5500 AH Veldhoven (NL)**
• **GONZALEZ HUESCA, Juan Manuel
5500 AH Veldhoven (NL)**

• **SMAL, Pavel
5500 AH Veldhoven (NL)**
• **AARDEN, Frans, Bernard
5500 AH Veldhoven (NL)**
• **RAVICHANDRAN, Arvind
5500 AH Veldhoven (NL)**
• **DOU, Meng
5500 AH Veldhoven (NL)**
• **HUBAUX, Arnaud
5500 AH Veldhoven (NL)**
• **VAN HERTUM, Pieter
5500 AH Veldhoven (NL)**

(74) Representative: **ASML Netherlands B.V.
Corporate Intellectual Property
P.O. Box 324
5500 AH Veldhoven (NL)**

(54)   **CLASSIFYING PRODUCT UNITS**

(57)   One embodiment relates to a method of classifying product units subject to a process performed by an apparatus, the method comprising: receiving KPI data, the KPI data associated with a plurality of components of the apparatus and comprising data associated with a plurality of KPIs; clustering the KPI data to identify a plurality of clusters; analyzing the plurality of clusters to identify a plurality of failure modes associated with the apparatus, for each identified failure mode assigning a threshold to each KPI associated with the failure mode; and for each of the plurality of product units: determining the likelihood of each of the plurality of failure modes based on KPI data of the product unit and the thresholds assigned to each KPI associated with one of the plurality of failure modes; and performing a classification based on the likelihoods of each of the plurality of failure modes.

FIG. 6

**Description**

<u>FIELD</u>

The present invention relates to a computer implemented method of determining a classification model for classifying product units (such as semiconductor wafers) and classifying product units which are subject to a process performed by an apparatus (such as a lithographic apparatus).

<u>BACKGROUND</u>

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Due to the high complexity of lithographic machines, diagnostics is a significant challenge. Especially when different modules and complex interactions between them are involved, it becomes increasingly difficult to identify the root-cause of a problem.

Key performance indicators (KPIs) can be built to indicate the health of a particular subsystem within a lithographic apparatus. In general, the KPI is constructed such that a large KPI value represents a poorly performing subsystem, and a small KPI value represents nominal performance. Various subsystems of the lithographic apparatus may interact with each other which results in KPIs correlating with each other.

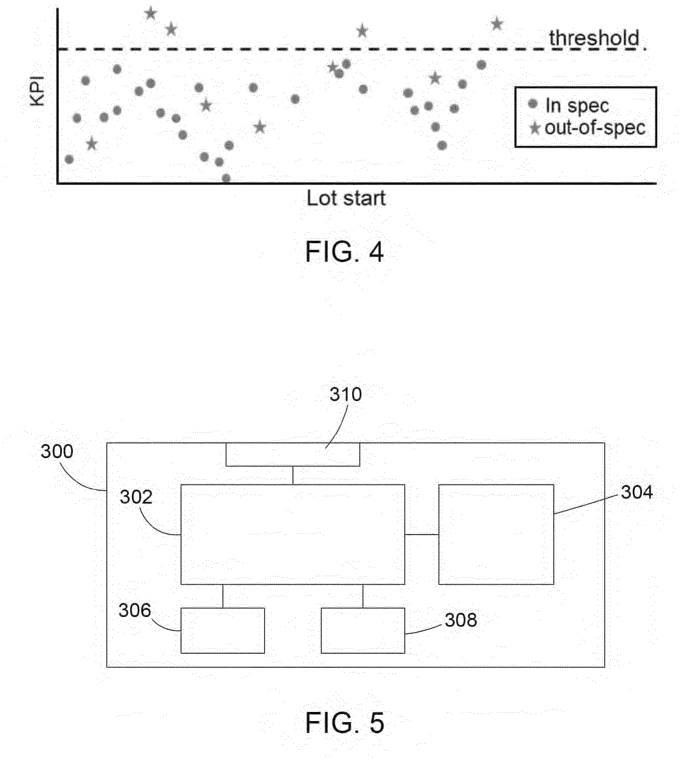

As a result, the KPIs can be used to detect drift, and stochastic excursions in subsystems. In many cases, putting a single threshold in some KPIs is enough to detect a few out-of-spec wafers (as depicted in Figure 4). Each data point in the plot of Figure 4 corresponds to a wafer. If one or more KPIs seem to be capable to detect many out-of-spec wafers, this is a strong indication that this KPI (or the combination of KPIs) is a Failure Mode (FM).

In most modelling approaches, the task of detecting FMs and out-of-spec wafers is treated as a supervised learning problem. The KPIs consist of the features of the problem based on which a classifier (or a regressor) is trained to predict overlay or other specific metrics. Given the imbalanced nature of the task, oversampling the out-of-spec population or adapting the optimization metric during hyperparameter tuning are typically used. Finally, diagnostics are usually provided by using standard methods such as Shapley values, feature importance visualizations, or lime-parameters and/or other methods.

<u>SUMMARY</u>

The inventors of the present disclosure have identified that most standard machine learning approaches fail in solving such problems due to the very low rates of out-of-spec wafers (typically 0.3% - 1.5%) and because of how KPIs are designed (each KPI is particularly designed to address a specific problem). In addition, it is often assumed that the KPIs are sufficient to make such detections whereas in fact there might be cases where there are no KPIs that can explain why a wafer is out-of-spec. In addition, many KPIs are correlated with each other. All the above are strong indications that the trained classifier/regressor is likely to overfit the data regardless of the effort that is spend in optimizing it.

The inventors of the present disclosure have identified that another approach to identify the KPIs that could potentially lead to the detection of out-of-spec wafers would be to perform an exhaustive and brute force search on all available KPIs. During this search, for every KPI all the individual thresholds together with different thresholds for KPI-combinations could be evaluated. This way of detecting out-of-spec wafers is suboptimal in providing any diagnostic solutions. Moreover, the threshold is determined on the whole population of the wafers that are exposed over a large period of time, and that limits the detection performance: Interaction between different subsystem failures are neglected in the single KPI approach, and that this is necessary to capture unknown and complicated failure modes. In case KPIs are fine-grained, and not mature enough to capture a subsystem failure, then they cannot be used for wafer failure detection.

Aspects of the present disclosure are directed at to automate the identification of Failure Modes (FMs), to enhance the detection capacity of out-of-spec wafers and to provide diagnostics.

According to one aspect of the present disclosure there is provided a computer implemented method of determining a classification model comprising KPI thresholds for classifying product units subject to a process performed by an apparatus, the method comprising:

> receiving KPI data obtained as a result of the plurality of product units being subject to the process, the KPI data associated with a plurality of components of the apparatus and comprising data associated with a plurality of KPIs;
> clustering the KPI data to identify at least one cluster;
> analyzing the at least one cluster to identify a plurality of failure modes associated with the apparatus, wherein said analyzing comprises, for one or more of the at least one cluster, identifying a plurality of sub-groups of KPI data relating to a failure of a product unit, each of the plurality of sub-groups of KPI data associated with a failure mode of the plurality of failure modes; and
> determining the classification model by assigning, for each identified failure mode, a threshold to each KPI associated with the failure mode.

The method may comprises projecting the KPI data to a lower dimensional space prior to performing the clustering. The method may comprise projecting the KPI data to a 2-dimensional space.

The identifying a plurality of sub-groups of KPI data of a cluster may comprise determining that a first distance between KPI data points in the cluster that are associated with a failure exceeds a second distance associated with all KPI data points in a largest cluster of the at least one cluster.

The first distance may correspond to a first principal component identified by performing principal component analysis on the KPI data points in the cluster that are associated with a failure, and the second distance is identified by performing principal component analysis on the KPI data points in the largest cluster.

The second distance may be a predetermined percentage of a length of a first principal component identified by performing the principal component analysis on the KPI data points in the largest cluster.

The identifying a plurality of sub-groups of KPI data of a cluster may comprise: performing independent component analysis on the KPI data points in the cluster to identify a plurality of independent components, each of the plurality of independent components associated with one or more KPIs; wherein each of the plurality of sub-groups of KPI data corresponds to an independent component of the plurality of independent components, whereby KPI data of each of the one or more KPIs of the independent component exceed a respective threshold associated with the KPI.

Each of the identified failure modes may be associated with one or more KPIs.

The method may further comprise supplementing the KPI data with artificially generated KPI data associated with out-of-specification product units.

According to another aspect of the present disclosure there is provided a computer implemented method of classifying product units subject to a process performed by an apparatus, the method comprising:

> receiving the classification model referred to in any of the methods described herein to obtain a threshold for each KPI associated with at least one failure mode;
> for each product unit of the product units subject to a process performed by an apparatus:
>
> > determining the likelihood of each of the at least one failure mode based on KPI data of the product unit and the threshold assigned to each KPI associated with the at least one failure mode; and
> > performing a classification of the product unit based on the likelihoods of the at least one failure mode.

The classification of the product unit may include a prediction whether the product unit is in-specification or out-of-specification.

The classification of the product unit may include a confidence of said prediction.

The performing the classification of the product unit may comprise, for each failure mode, comparing the likelihood to a respective predetermined failure mode threshold to determine whether the failure mode predicts the product unit to be out-of-specification.

If only a single failure mode has a likelihood that exceeds its predetermined failure mode threshold, the classification may include (i) a prediction that the product unit is out-of-specification, and (ii) the one or more KPIs associated with the single failure mode.

If a plurality of failure modes have a likelihood that exceeds its predetermined failure mode threshold, the classification may include a weighted prediction of the product unit being out-of-specification for each of the plurality of failure modes.

The apparatus may be a lithographic apparatus and the product units may be semiconductor wafers.

According to one aspect of the present disclosure there is provided a computer implemented method of classifying product units subject to a process performed by an apparatus, the method comprising:

receiving KPI data obtained as a result of the plurality of product units being subject to the process, the KPI data associated with a plurality of components of the apparatus and comprising data associated with a plurality of KPIs; clustering the KPI data to identify at least one cluster;

analyzing the at least one cluster to identify a plurality of failure modes associated with the apparatus, wherein said analyzing comprises, for one or more of the at least one cluster, identifying a plurality of sub-groups of KPI data relating to a failure of a product unit, each of the plurality of sub-groups of KPI data associated with a failure mode of the plurality of failure modes;

for each identified failure mode assigning a threshold to each KPI associated with the failure mode; and

for each of the plurality of product units:

determining the likelihood of each of the plurality of failure modes based on KPI data of the product unit and the thresholds assigned to each KPI associated with one of the plurality of failure modes; and

performing a classification of the product unit based on the likelihoods of each of the plurality of failure modes.

According to one aspect of the present disclosure there is provided a non-transitory computer-readable storage medium comprising instructions which, when executed by a processor of a device cause the processor to perform any of the methods described herein.

The instructions may be provided on one or more carriers. For example there may be one or more non-transient memories, e.g. a EEPROM (e.g. a flash memory) a disk, CD- or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

According to one aspect of the present disclosure there is provided a device comprising a processor configured to perform any of the methods described herein.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a known technique of how fail wafers are detected by setting a threshold on KPIs
- Figure 5 depicts an example computer device on which embodiments can be implemented;
- Figure 6 is a flow diagram of the steps of a method according to the present invention;
- Figure 7a illustrates how data relating to multiple KPIs can be projected to a two-dimensional space;
- Figure 7b illustrates how the allocation of the wafers on the two-dimensional space captures the time element and chuck id without having access to this information.
- Figure 8 illustrates clustering of KPI data;
- Figure 9a illustrates the detection of fail wafers by setting a global threshold using a single KPI;

- Figures 9b-d illustrates the detection of fail wafers by clustering the wafers and setting thresholds for the KPI per cluster;
- Figure 10 illustrates the detection of failure modes which are hard to identify; shows the distribution of data items comprising two features, where some of the data items are derived from a module the faulty machine and others are derived from the corresponding module of the reference machines;
- Figures 11a-b illustrate steps involved in reporting failure modes that belong to the same cluster; and
- Figure 12 is a Bayesian network illustration that combines the use of multiple FMs in order to make a prediction whether a wafer is in/out-of-spec.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100nm). The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

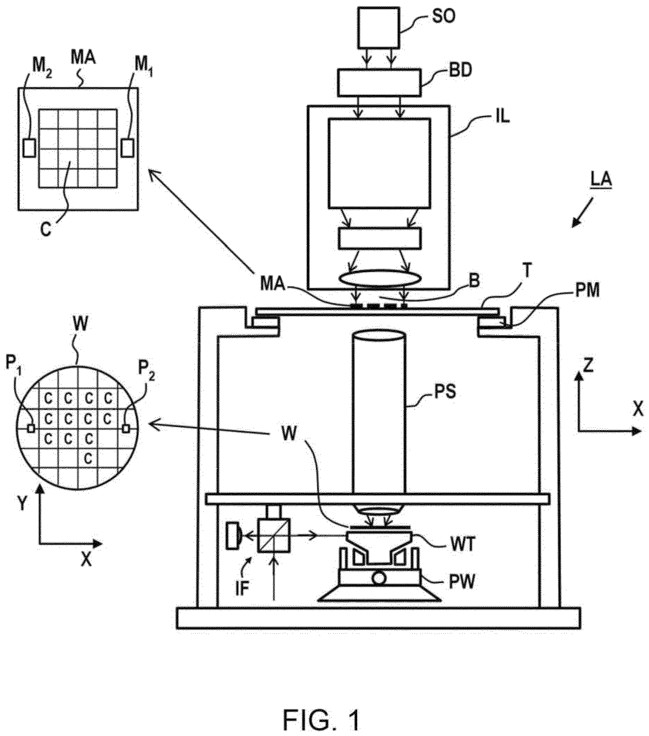

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks P1, P2 are known as scribe-lane alignment marks when these are located between the target portions C.

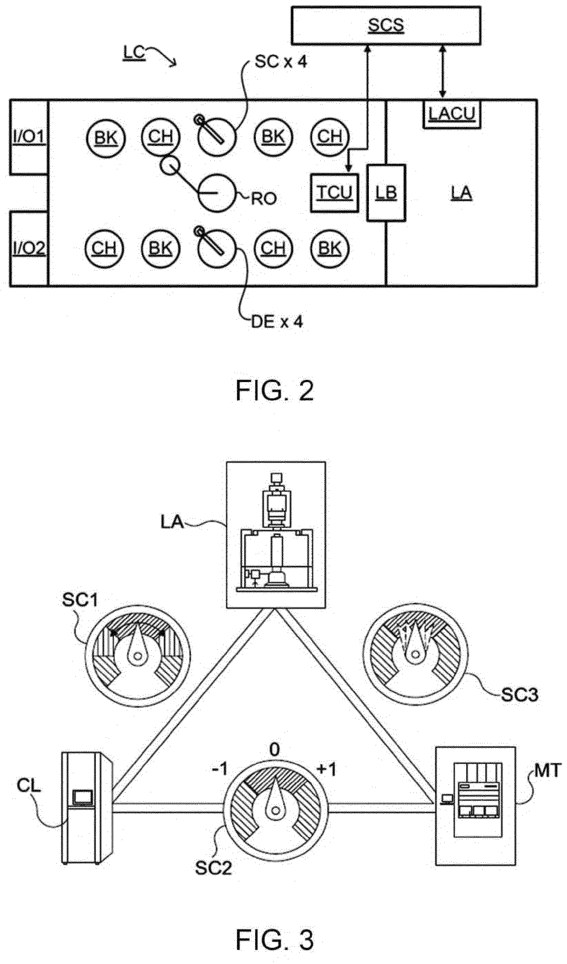

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

Figure 5 illustrates a simplified view of a computing device 300 suitable to perform the methods described herein. As shown in Figure 5, the computing device 300 comprises a central processing unit ("CPU") 302, to which is connected a memory 304. The functionality of the CPU 302 described herein may be implemented in code (software) stored on a memory (e.g. memory 304) comprising one or more storage media, and arranged for execution on a processor comprising on or more processing units. The storage media may be integrated into and/or separate from the CPU 302. The code is configured so as when fetched from the memory and executed on the processor to perform operations in line with embodiments discussed herein. Alternatively, it is not excluded that some or all of the functionality of the CPU 302 is implemented in dedicated hardware circuitry (e.g. ASIC(s), simple circuits, gates, logic, and/or configurable hardware circuitry like an FPGA).

The computing device 300 comprises an input device 306 to allow a user to input data. The input device 306 may comprise a keyboard, mouse, touchscreen, microphone etc. The computing device 300 further comprises an output device 308 to output data to the user. The output device 308 may comprise a display and/or a speaker. The computing device 300 may comprise a communications interface 310 for communication of data to and from the computing device 300.

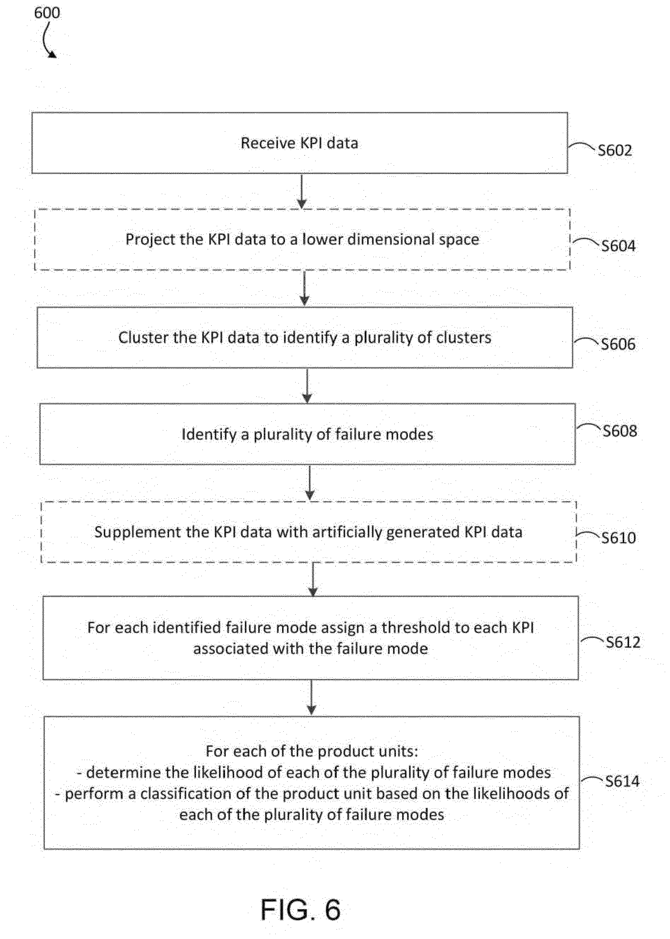

A method 600 according to the present invention of classifying product units subject to a process performed by an apparatus is illustrated in Figure 6. The method may be performed using the computing device 300 of Figure 5 (in particular the CPU 302 of the computing device 300). We describe embodiments herein with reference to an example whereby the product units are semiconductor wafers which are subject to a lithographic process performed by a lithographic apparatus. The method 600 is a two stage process. The first stage is a training phase which relates to determining a classification model comprising KPI thresholds for later use in classifying product units subject to a process performed by an apparatus. This first stage comprises step S602-S612 described in more detail below. The second stage is a classification phase which relates to performing the classification of product units (applying KPI data to determined KPI thresholds). This second stage comprises step S614 described in more detail below.

The first and second stages of the method 600 may be performed on a single set of KPI data. That is, a single set of KPI data may be used to both determine the classification model and classify wafers which the KPI data relates to.

Alternatively, the KPI thresholds per FM may be determined (trained) based on a set of KPI data of training wafers and the actual use of these thresholds (classification) may be based on different KPI data (of product wafers for example). We describe the two stages of the method 600 in more detail below.

At step S602, KPI data is received. The CPU 302 may receive the KPI data from memory 304. Alternatively or additionally, the CPU 302 may receive the KPI data from a remote device via the communications interface 310. The remote device may be the lithographic apparatus or a storage device such as a web server or database. The KPI data is obtained as a result of each of a plurality of wafers being subject to the lithographic process performed by the lithographic apparatus. Multiple components of the lithographic apparatus are involved in the lithographic process, and the KPI data received by the CPU 302 at step S602 relates to these multiple components of the lithographic apparatus. For example, a lens of the projection system PS may deform due to high temperature when a wafer is being subject to the lithographic process, and the KPI data may include data relating to how deformed a lens was when or more wafers were subject to the lithographic process. In another example, the KPI data may include data relating to how flat the substrate support WT was when or more wafers were subject to the lithographic process. In yet another example, the KPI data may include data relating to the alignment of the reticle when or more wafers were subject to the lithographic process. Thus, it will be appreciated that the received KPI data may include, for a particular wafer subject to the lithographic process, KPI data associated with one or more components of the lithographic apparatus. The KPI data received at step S602 includes KPI data associated with one or more wafers that are out-of-spec.

The KPI data received at step S602 is in multiple dimensions (in at least three dimensions). The KPI data received at step S602 may be in more than 100 dimensions. As an optional step, at step S604 the CPU 302 projects the KPI data to a lower dimensional space. Step S604 may be performed by the CPU 302 executing a manifold learning algorithms like UMAP and t-SNE which have the ability to project the data to a lower dimensional space while keeping the internal structure.

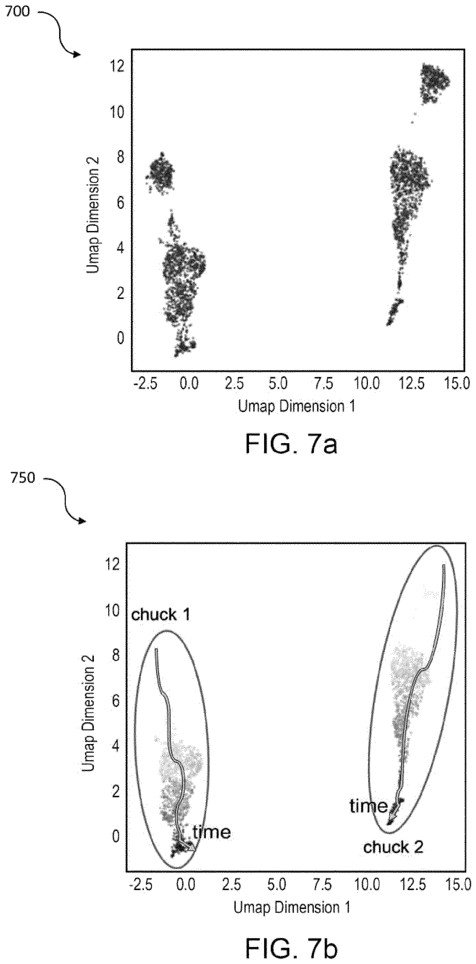

Projecting the data to such a space manages to summarize the population of the data and shows how many variations we expect to have with respect to the KPIs and the inner-KPI correlations. In other words, wafers that are "similar" with respect to their KPIs, are expected to be close on the lower dimensional space created by the manifold learning algorithm. This is shown in the Figure 7a which illustrates the result 700 of projecting around 70 KPIs to a two dimensional space created by a manifold learning algorithm. It will be appreciated that the lower dimensional space being in twodimensions is merely an example.

Whilst we refer above to the projection of the KPI data to a lower dimensional space being performed using a manifold learning algorithm, this is merely an example.

There are alternative methods in performing such a projection at step S604, including the use of principal component analysist (PCA) and Autoencoder variants. However, manifold learning algorithms typically project the data by maintaining a time structure which is in general desirable when it comes to the detection of failure modes. This is shown in Figure 7b by result 750 where dark colours correspond to wafers with more recent lot start time of the lithographic process and light colours correspond to wafers with an older lot start time the lithographic process. In addition, in embodiments whereby the lithography apparatus includes more than one support WT (more than one chuck) it is observed that the KPI data of the two chucks 'chuck 1' and 'chuck 2' tends to be separated and form different mega clusters (depicted by the drawn ellipses). The manifold learning algorithms maintain a time structure without having access to the time a wafer was exposed on. That means that the manifold learning algorithms are able to capture drift effects, and distribution shifts.

At step S606, the CPU 302 clusters the KPI data using a clustering algorithm (like agglomerative, k-means, spectral etc.). If step S604 of projecting the KPI data to a lower dimensional space is followed (preferably by using a Manifold learning algorithm), then the clustering algorithm is applied to the dimensions created by the previous step. If the previous step is not followed, clustering is applied by using the KPIs that are available.

The clustering is performed at step S606 for a number of reasons.

Firstly, the clustering performed at step S606 is used as a way to group KPIs that lead to a Failure Mode (FM), this is important for diagnostics.

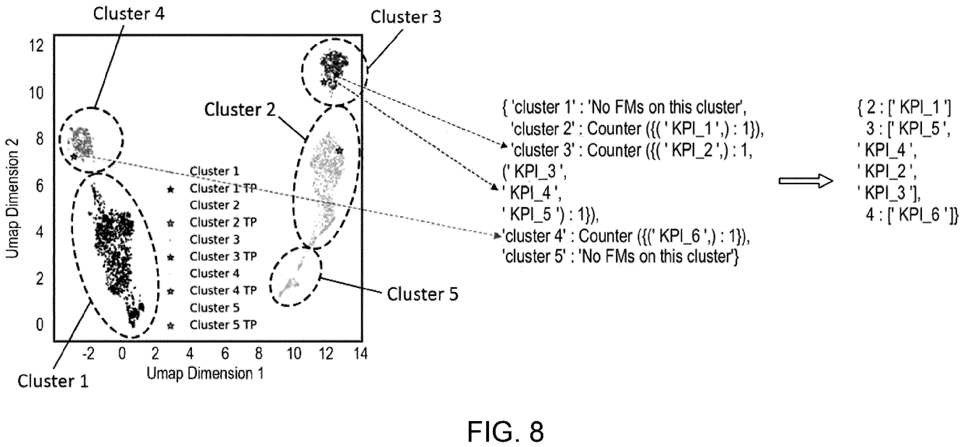

Multiple KPIs are expected to explain why wafers are "out-of-spec" and these KPIs are likely to be different for these wafers. When referring herein to a wafer that is "out-of-spec" or a "fail wafer" we refer to a wafer that has been subject to the lithographic process and as a result has a parameter (e.g. relating to overlay, focus, critical dimension or other parameter) which is outside of a predetermined acceptable value range. When referring herein to a wafer that is "in-spec" we refer to a wafer that has been subject to the lithographic process and as a result has a parameter (e.g. relating to overlay, focus, critical dimension or other parameter) which is within a predetermined acceptable value range. Clustering offers a way to group the KPIs in order to identify the FMs which is needed for diagnostic purposes. Figure 8 illustrates why clustering is performed. There are in total four wafers that can be detected by setting a global threshold on six different KPIs (note that not all of the six KPIs can detect the four wafers). Reporting all KPIs together would be obsolete and it would not have any diagnostic power. The KPIs are grouped based on the cluster that their corresponding wafers belong to.

Figure 8 illustrates how clustering offers a way to group KPIs in order to detect FMs. In particular, Figure 8 shows five clusters of KPI data. The plot on the left shows where the "true positive" wafers (wafers that can be detected by one single KPI) are located. The list in the middle shows what are the KPIs that can lead to the detection of these wafers. The list on the right shows how these KPIs can be reported. It can be seen from Figure 8 that no FMs are detected from cluster 1 or cluster 5. A single FM is detected from cluster 2 with this FM being associated with a single KPI, KPI_1. A single FM is detected from cluster 3 with this FM being associated with four KPIs, KPI_2, KPI_3, KPI_4, and KPI_5. A single FM is detected from cluster 4 with this FM being associated with a single KPI, KPI_6. Clustering the wafers means that similar wafers with respect to their KPIs are grouped together. When there is a FM linked to a particular problem, it is likely that is affecting "similar" wafers, hence the rationale for studying FMs per cluster.

Secondly, the clustering performed at step S606 enhances the detection performance of existing KPIs.

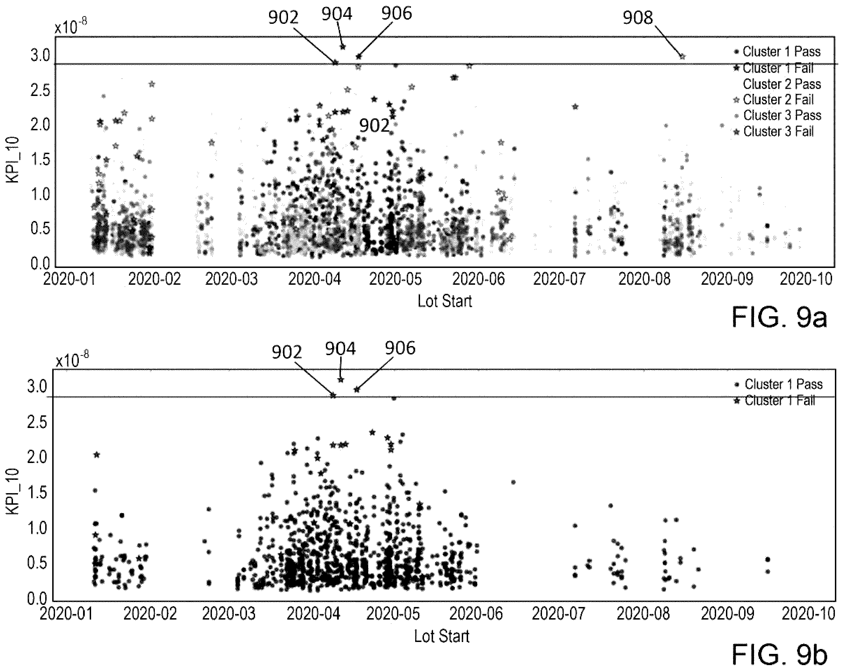

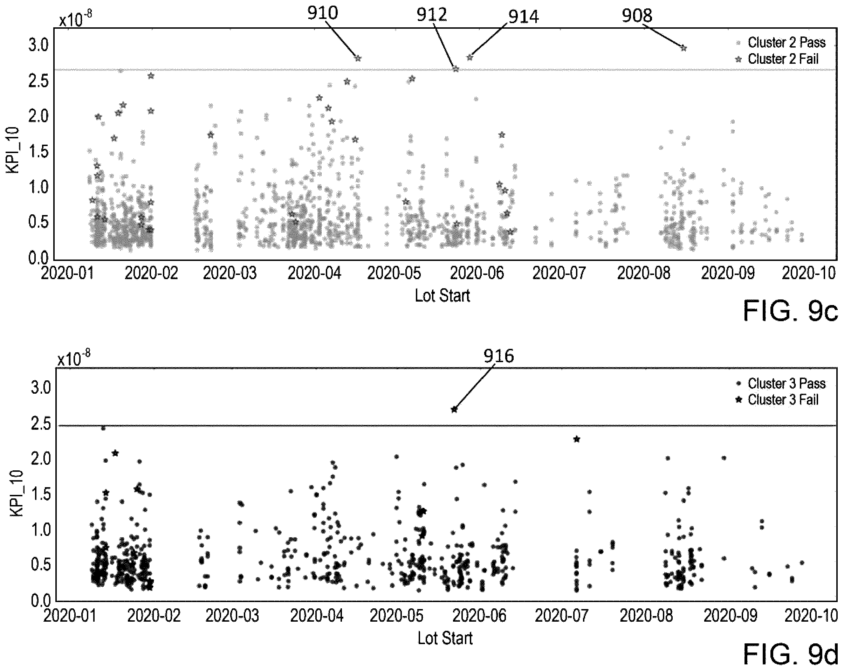

For instance in the example shown in Figure 9a, four wafers (identified by numerals 902, 904, 906 and 908) can be detected by using a global threshold on the KPI, KPI_10. That is, the same threshold KPI threshold is used for each of the clusters of KPI data (clusters 1-3 in the example of Figure 9a).

In contrast, Figures 9b-d illustrate how a total of eight wafers can be detected by clustering the wafers and setting the KPI thresholds per cluster, resulting in doubling recall without sacrificing any precision. In particular, a first cluster specific KPI threshold is used for the KPI data of cluster 1 to detect wafers 902, 904 and 906; a second cluster specific KPI threshold is used for the KPI data of cluster 2 to detect wafers 908, 910, 912 and 914; and a third cluster specific KPI threshold is used for the KPI data of cluster 3 to detect wafer 916. Thus Figures 9b-d show how the clustering performed at step S606 enhances the detection of fail wafers by detecting fail wafers 910, 912, 914 and 916 that were not detected when using the global threshold shown in Figure 9a.

Thirdly, the clustering performed at step S606 leads to the detection of new FMs which are difficult to identify.

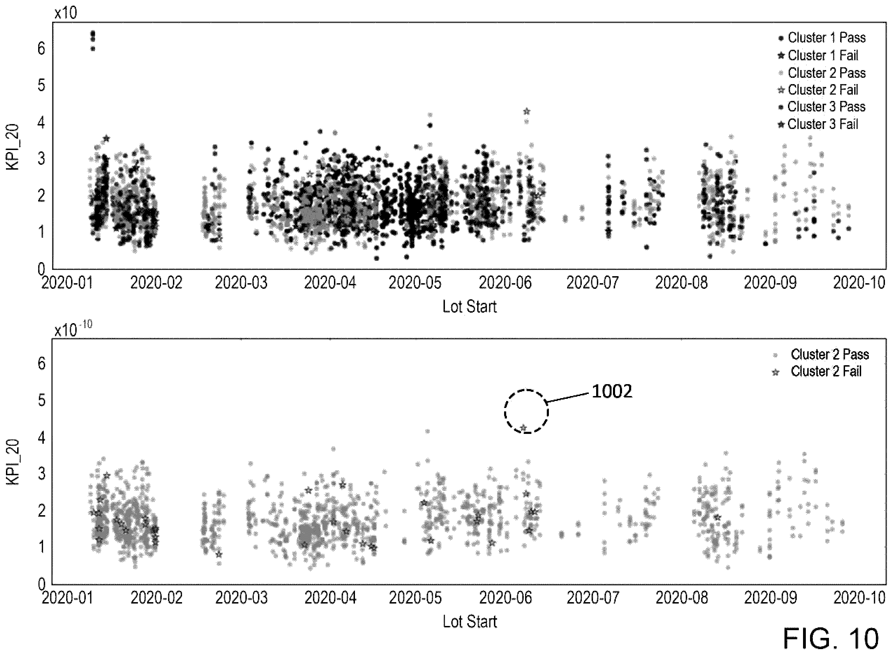

In the example shown in Figure 10, the KPI KPI_20 is not capable of detecting any out-of-spec wafers in the whole population of KPI data of three clusters, clusters 1-3 (see upper plot of Figure 10). However, by setting a threshold per cluster, one out-of-spec wafer (identified by numeral 1002) can be detected (from the KPI data of cluster 2 as shown in the lower plot of Figure 10).

Referring back to the method 600, at step S608 the CPU 302 analyzes the plurality of clusters identified at step S606 to identify a plurality of failure modes (FMs) associated with the lithographic apparatus. There is a chance that more than one FM exist in one of the clusters identified at step S606 and step S608 is performed to make the method 600 more robust to this scenario.

Out-of-spec wafers that belong to the same cluster but are located far away from each other on the manifold learning space, are likely to have different FMs. At step S608, the CPU 302 analyzes each of the plurality of clusters identified at step S606 to determine that one or more of the clusters comprise a plurality of sub-groups of KPI data. That is, step S608 performs an inner cluster detection of FMs.

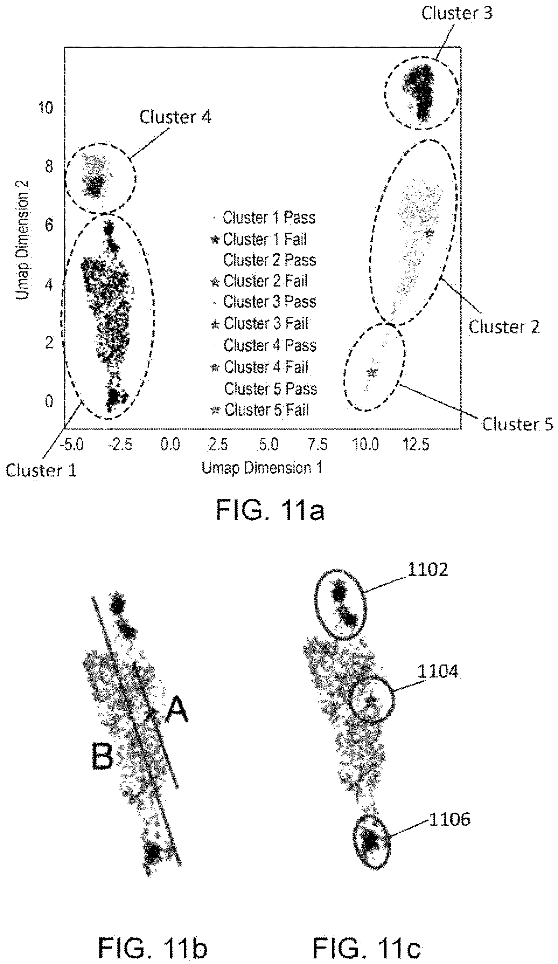

For instance, there are two sub-groups of out-of-spec wafers for cluster 1 in Figure 11a. These sub-groups are likely to have different FMs. Thus, these FMs should be reported separately for cluster 1. In this example, the two sub-groups are analysed and the outcome of the analysis is that there are different KPIs that lead to these failures. The analysis performed at step S608 can be performed in a number of different ways.

A first inner cluster detection method that may be utilized at step S608 is based on principal component analysis, and is described with reference to Figures 11b and 11c.

In the first inner cluster detection method a 1st Principal Component (PC) for every cluster identified at step S606 is calculated. In embodiments in which optional step S604 is performed, a 1st Principal Component (PC) for every cluster is calculated on the space that is created by the Manifold Learning algorithm (or on the space that is created by any other technique employed to project the KPI data to a lower dimensional space). The $1^{st}$ PC is defined for every cluster separately by analysing all wafers (in-spec and out-of-spec wafers). This means, that the $1^{st}$ PC is different between cluster 1 and cluster 2 and cluster 3, and so on.

The largest cluster is identified (in the example shown in Figure 11a, cluster 1 is the largest), and a line "A" is identified which has a length which is a predetermined percentage of the $1^{st}$ PC for cluster 1 (the largest of the clusters). This predetermined percentage may for example be 50%, but it will be appreciated that this is configurable and is merely an example. The largest cluster is the cluster that expands the most on the latent space. Typically, the largest cluster comprises KPI data of the most wafers (compared to the other clusters), however this may not always be the case.

A $1^{st}$ PC for every cluster identified at step S606 is also calculated by using KPI data associated with out-of-spec wafers in that cluster. The cluster specific $1^{st}$ PC (shown as line "B") based on out-of-spec wafers in cluster 1 is shown in Figure 11b. A corresponding line B is calculated on each cluster individually by using only the out-of-spec wafers (of a particular cluster). This means that in the first inner cluster detection method, line A is constant, but lines B changes between clusters.

In the first inner cluster detection method, for each cluster the CPU 302 determines whether the distance between the out-of-spec wafers in that cluster (indicated by the length of line B) exceeds the predetermined percentage of the $1^{st}$ PC for the largest cluster length (indicated by the length of line A). If the length of line B is greater than line A then the CPU 302 performs inner-cluster clustering of the out-of-spec wafers of that cluster. It will be appreciated that when optional step S604 is not performed, the Principal Components referred to above can be calculated based on the KPI data. In other words, the above described process of separating the data based on PCs, is not exclusively applicable on the manifold learning space (or the space created by any other algorithm used at step S604), the PCs can be calculated on KPI data directly.

In the example of Figure 11a, it is only cluster 1 that meets this condition, however it will be appreciated that the inner-cluster clustering may be performed with respect to one or more of the clusters identified at step S606.

As noted above, in the first inner cluster detection method, line A is constant, but lines B changes between clusters. This is because some clusters may be very small and if A is calculated for every cluster separately, then some clusters, because they are small, are likely to have false inner-cluster FMs.

Figure 11c illustrates the results of performing the inner-cluster clustering on cluster 1 whereby three sub-groups 1102, 1104, 1106 of out-of-spec wafers are identified for cluster 1 each corresponding to a respective FM (the sub-group 1104 consists of only one out-of-spec wafer).

An alternative way of detecting failure modes per cluster, is to rely on independent component analysis (ICA), instead of checking each KPI per cluster as to whether it can detect out-of-spec wafers). ICA is capable of providing a list (or multiple lists) of KPIs per cluster. These KPI lists are assessed like before by checking if a threshold that separates in-spec and out-of-spec wafers exists. This second inner cluster detection method is described below.

ICA is able to separate sources signals from observed data, by looking for independent components (ICs) that maximize the statistical independence of the estimated components. Thus based on the KPIs, ICA can applied to identify different independent components, and some components could be potential failure modes.

In the second inner cluster detection method that may be utilized at step S608, for each cluster identified at step S606, ICA is applied to identify the ICs per cluster. Each identified IC is composed of a list of KPIs contributing to this component. For example, for cluster 1 the ICA performed by the CPU 302 on the KPI data of cluster may identify a list of three ICs, IC1, IC2, and IC3. IC1 may be composed of a list of KPIs comprising KPIa, KPIb, and KPIc. IC2 may be composed of a list of KPIs comprising KPIb and KPId. IC3 may be composed of a list of KPIs comprising KPIa, KPIb, and KPIe. There are a few functions to measure the independence, such as functions to minimal mutual information or to maximize the non-Gaussianity of the components.

After the ICs are detected, each of these ICs are assessed whether they can detect out-of-spec wafers by simply drawing a threshold on their KPIs. If this is the case, an IC is considered as Failure Mode. In particular, IC2 may be detected as a FM if the KPIb data associated with cluster 1 comprises KPIb data of one or more wafers which exceeds a predetermined KPIb threshold, and if the KPId data associated with cluster 1 comprises KPId data of one or more wafers which exceeds a predetermined KPId threshold.

Upon completion of step S608 the CPU 302 will have identified a plurality of FMs, and for each FM, one or more KPIs which contribute to the FM.

As an optional step, at step S610 the CPU 302 supplements the KPI data with artificially generated KPI data associated with out-of-spec wafers. The population of the out-of-spec wafers may be very limited compared to the population of the in-spec wafers. In order to properly study the population of the out-of-spec wafers and to optimize the threshold setting on the KPIs (referred to in more detail below), step S610 may be performed to generate artificial data of out-of-spec wafers by the CPU 302 executing a generative learning algorithm. Advances in generative deep learning allow this, with the use of autoencoders and GANs. With a simple use of stacked autoencoders the inventors have observed that it is possible to create a latent space inside which there is a region where most wafers are out-of-spec and artificial instances can be created from that region in order to create out-of-spec wafers with similar characteristics.

Step S610 may be performed before or after the clustering that is performed at step S606. Performing step S610 after the clustering may be preferred because it is envisaged that the generative learning algorithm may be trained better by using data coming from an individual cluster identified at step S606.

At step S612, for each FM identified at step S608, the CPU 302 determines a classification model by assigning a threshold to each KPI associated with the FM. These values of these thresholds are set depending on what metric needs to be optimized (precision, recall, etc.). The FMs together with their corresponding KPI thresholds can be stored in memory, allowing their direct use for inline predictions to detect out-of-spec wafers. For example, the FMs together with their corresponding KPI thresholds can be stored in memory 304 or in a remote storage device such as a web server or database. These thresholds are FM specific, and in the later classification phase, each wafer is evaluated against all known FMs.

At step S614, for each of a plurality of wafers the the CPU 302 determines the likelihood of each of the plurality of FMs based on KPI data of the wafer and the KPI thresholds assigned to each KPI associated with one of the FMs, and performs a classification of the wafer based on the likelihoods of each of the plurality of FMs. In the context of a wafer, the classification comprises whether the wafer is in-spec or out-of-spec. The classification may also comprise a confidence of this prediction. As noted above, the KPI data of the plurality of wafers classified at step S614 may be the same, or different to the KPI of wafers used to determine the classification model.

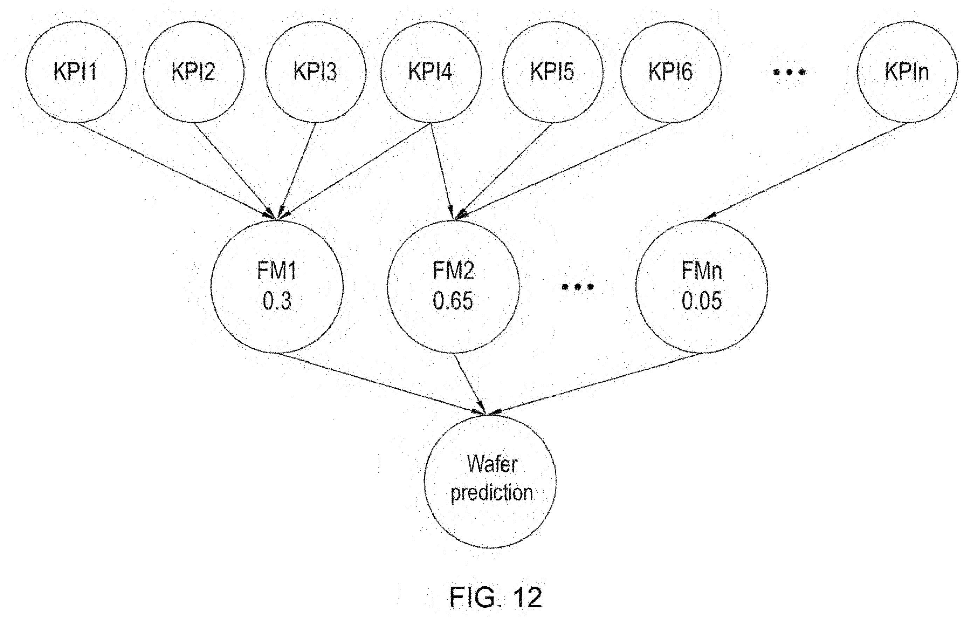

Steps S612 and S614 may be performed by using a Bayesian network. Figure 12 is an illustration of an example Bayesian network that combines the use of multiple FMs in order to make a prediction whether a wafer is in/out-of-spec. The rationale of using a Bayesian network is to improve the combining of the the likelihoods of each of the plurality of FMs in order to perform the classification of whether a wafer is in-spec or out-of-spec, and to give a final probability estimation of the prediction (i.e. a confidence of the prediction).

In the example Bayesian network shown in Figure 12, the contribution of KPI1-KPI4 to FM1, and the contribution of KPI4-KPI6 to FM2 for every wafer is may be learnt and determined by a Bayesian network. The Bayesian network links probabilities of a wafer being out-of-spec because of one KPI (estimated by the Bayesian network and typically might not be depended on a KPI threshold) to probabilities of FMs occurring. This could be done (i) by building a Bayesian Network by incorporating domain knowledge and allowing for n-n relations between FM and KPI (which may have hidden states in between), (ii) from data, or (iii) a combination of both a Bayesian Network and data, by fixing the problem structure manually and learning the parameters (how KPIs propagate towards FMs) from the data.

In the example Bayesian network shown in Figure 12, it is shown that the Bayesian network has determined that a particular wafer being out-of-spec due to a first FM, FM1, is 30% and has determined that the particular wafer being out of spec due to a second FM, FM2, is 65%. The Bayesian network outputs probabilities for all FMs for each wafer being evaluated. The FM probabilities in the middle layer of the Bayesian network (the likelihood of each of the plurality of FMs determined at step S614) will vary with each wafer being assessed.

To determine the likelihood of each of the plurality of FMs at step S614, the CPU 302 may perform the following steps:

- Select all the in-spec wafers in the dataset
- Find the distribution (type and parameters) that minimize the sum square error of the in-spec population
- Compute the class probabilities of a wafer being in/out-of-spec
- Identify the distribution (type and parameters) that minimize the sum square error of the wafer population (including in/out-of-spec),
- For every predicted wafer, apply the naive bayes formula using all the parameters previously calculated to predict $P(\text{out-of-spec} \mid FM_{value}) = 1 - P(\text{in-spec} \mid FM_{value})$

In particular we note that $P(\text{in-spec} \mid FM_{value})$ can be found based on the following formula:

$$P(\text{in-spec} \mid FM_{value}) = \frac{P(FMvalue \mid \text{in-spec}) * P(\text{in-spec})}{P(FMvalue)}$$

Whereby $P(FMvalue \mid \text{in-spec})$ is given by the distribution (type and parameters) that minimize the sum square error of the in-spec population;

$P(\text{in-spec})$ is determined by a simple division between the number of in-spec wafers among all the wafers; and

$P(FMvalue)$ is given by the distribution (type and parameters) that minimize the sum square error of the wafers population (including in/out-of-spec).

The output from each one of the FMs (predicted label plus predicted probability) is used by the CPU 302 at step S614 to perform the classification by combining all FMs prediction into one global out-of-spec prediction

Each of the FMs are associated with a FM threshold which define when a wafer is classified as out-of-spec. These FM thresholds are able to be configured according to a user's needs. In a first example with reference to the Bayesian network shown in Figure 12, the FM threshold associated with FM1 may be 30% whereas the FM threshold associated with FM2 may be 80%. In this example, for this particular wafer, the only FM that predicts out-of-spec is FM1 then the overall classification will be out-of-spec described by FM1 e.g. "the likelihood of this wafer being out-of-spec due to FM1 is 30%".

If two (or more) FMs predict out-of-spec for a particular wafer, then the CPU 302 weights their confidence to give an overall weighted prediction per FM, and thus, per symptom as each FM is associated to a symptom. In a second example (not with reference to the Bayesian network shown in Figure 12), if there is a 50% chance for a particular wafer to be out-of-spec because of FM1 and 30% for the particular wafer to be out-of-spec because of FM2 (and both of these probabilities exceed their respective FM threshold). On the event of flagging the wafer as out-of-spec, the contribution to flagging because of FM1 could be provided as 50/(50+30) and the contribution to flagging because of FM2 could be provided as 30/(50+30).

The inventors have observed that by utilising the method 600 the recall of detecting out-of-spec wafers can be doubled, resulting in significant detection performance improvement. In addition, by utilising the method 600 it is possible to detect FMs that are hard to identify.

Further embodiments of the invention are disclosed in the list of numbered clauses below:

1. A computer implemented method of determining a classification model comprising KPI thresholds for classifying product units subject to a process performed by an apparatus, the method comprising:

    receiving KPI data obtained as a result of the plurality of product units being subject to the process, the KPI data associated with a plurality of components of the apparatus and comprising data associated with a plurality of KPIs;
    clustering the KPI data to identify at least one cluster;
    analyzing the at least one cluster to identify a plurality of failure modes associated with the apparatus, wherein said analyzing comprises, for one or more of the at least one cluster, identifying a plurality of sub-groups of KPI data relating to a failure of a product unit, each of the plurality of sub-groups of KPI data associated with a failure mode of the plurality of failure modes; and
    determining the classification model by assigning, for each identified failure mode, a threshold to each KPI associated with the failure mode.

2. The computer implemented method according to clause 1, wherein the method comprises projecting the KPI data to a lower dimensional space prior to performing the clustering.

3. The computer implemented method according to clause 2, wherein the method comprises projecting the KPI data to a 2-dimensional space.

4. The computer implemented method according to any preceding clause, wherein the identifying a plurality of sub-groups of KPI data of a cluster comprises:
determining that a first distance between KPI data points in the cluster that are associated with a failure exceeds a second distance associated with all KPI data points in a largest cluster of the at least one cluster.

5. The computer implemented method according to clause 4 wherein the first distance corresponding to a first principal component identified by performing principal component analysis on the KPI data points in the cluster that are associated with a failure, and the second distance is identified by performing principal component analysis on the KPI data points in the largest cluster.

6. The computer implemented method according to clause 5, wherein the second distance is a predetermined percentage of a length of a first principal component identified by performing the principal component analysis on the KPI data points in the largest cluster.

7. The computer implemented method according to any of clauses 1 to 3, wherein the identifying a plurality of sub-groups of KPI data of a cluster comprises:

    performing independent component analysis on the KPI data points in the cluster to identify a plurality of independent components, each of the plurality of independent components associated with one or more KPIs;
    wherein each of the plurality of sub-groups of KPI data corresponds to an independent component of the plurality of independent components, whereby KPI data of each of the one or more KPIs of the independent component exceed a respective threshold associated with the KPI.

8. The computer implemented method according to any preceding clause, wherein each of the identified failure modes is associated with one or more KPIs.

9. The computer implemented method according to any preceding clause, further comprising supplementing the KPI data with artificially generated KPI data associated with out-of-specification product units.

10. A computer implemented method of classifying product units subject to a process performed by an apparatus, the method comprising:

receiving the classification model according to any preceding clause to obtain a threshold for each KPI associated with at least one failure mode;

for each product unit of the product units subject to a process performed by an apparatus:

determining the likelihood of each of the at least one failure mode based on KPI data of the product unit and the threshold assigned to each KPI associated with the at least one failure mode; and

performing a classification of the product unit based on the likelihoods of the at least one failure mode.

11. The computer implemented method according to clause 10, wherein the classification of the product unit includes a prediction whether the product unit is in-specification or out-of-specification.

12. The computer implemented method according to clause 11, wherein the classification of the product unit includes a confidence of said prediction.

13. The computer implemented method according to any of clauses 10 to 12, wherein performing the classification of the product unit comprises, for each failure mode, comparing the likelihood to a respective predetermined failure mode threshold to determine whether the failure mode predicts the product unit to be out-of-specification.

14. The computer implemented method according to clause 13, wherein if only a single failure mode has a likelihood that exceeds its predetermined failure mode threshold, the classification includes (i) a prediction that the product unit is out-of-specification, and (ii) the one or more KPIs associated with the single failure mode.

15. The computer implemented method according to clause 13, wherein if a plurality of failure modes have a likelihood that exceeds its predetermined failure mode threshold, the classification includes a weighted prediction of the product unit being out-of-specification for each of the plurality of failure modes.

16. The computer implemented method according to any preceding clause, wherein the apparatus is a lithographic apparatus and the product units are semiconductor wafers.

17. A computer implemented method of classifying product units subject to a process performed by an apparatus, the method comprising:

receiving KPI data obtained as a result of the plurality of product units being subject to the process, the KPI data associated with a plurality of components of the apparatus and comprising data associated with a plurality of KPIs;

clustering the KPI data to identify at least one cluster;

analyzing the at least one cluster to identify a plurality of failure modes associated with the apparatus, wherein said analyzing comprises, for one or more of the at least one cluster, identifying a plurality of sub-groups of KPI data relating to a failure of a product unit, each of the plurality of sub-groups of KPI data associated with a failure mode of the plurality of failure modes;

for each identified failure mode assigning a threshold to each KPI associated with the failure mode; and

for each of the plurality of product units:

determining the likelihood of each of the plurality of failure modes based on KPI data of the product unit and the thresholds assigned to each KPI associated with one of the plurality of failure modes; and

performing a classification of the product unit based on the likelihoods of each of the plurality of failure modes.

18. A non-transitory computer-readable storage medium comprising instructions which, when executed by a processor of a device cause the processor to perform the method of any preceding clause.

19. A device comprising a processor configured to perform the the method of any of clauses 1-17.

Although specific reference may be made in this text to the use of a lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquidcrystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions. Embodiments of the present disclosure are not limited to where the apparatus is a lithographic tool, and instead extend to classifying product units subject to a process performed by any apparatus.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A computer implemented method of determining a classification model comprising KPI thresholds for classifying product units subject to a process performed by an apparatus, the method comprising:

    receiving KPI data obtained as a result of the plurality of product units being subject to the process, the KPI data associated with a plurality of components of the apparatus and comprising data associated with a plurality of KPIs;
    clustering the KPI data to identify at least one cluster;
    analyzing the at least one cluster to identify a plurality of failure modes associated with the apparatus, wherein said analyzing comprises, for one or more of the at least one cluster, identifying a plurality of sub-groups of KPI data relating to a failure of a product unit, each of the plurality of sub-groups of KPI data associated with a failure mode of the plurality of failure modes; and
    determining the classification model by assigning, for each identified failure mode, a threshold to each KPI associated with the failure mode.

2. The computer implemented method according to claim 1, wherein the method comprises projecting the KPI data to a lower dimensional space prior to performing the clustering.

3. The computer implemented method according to claim 2, wherein the method comprises projecting the KPI data to a 2-dimensional space.

4. The computer implemented method according to any preceding claim, wherein the identifying a plurality of sub-groups of KPI data of a cluster comprises:
   determining that a first distance between KPI data points in the cluster that are associated with a failure exceeds a second distance associated with all KPI data points in a largest cluster of the at least one cluster.

5. The computer implemented method according to claim 4, wherein the first distance corresponding to a first principal component identified by performing principal component analysis on the KPI data points in the cluster that are associated with a failure, and the second distance is identified by performing principal component analysis on the KPI data points in the largest cluster.

6. The computer implemented method according to claim 5, wherein the second distance is a predetermined percentage of a length of a first principal component identified by performing the principal component analysis on the KPI data points in the largest cluster.

7. The computer implemented method according to any of claims 1 to 3, wherein the identifying a plurality of sub-groups of KPI data of a cluster comprises:

    performing independent component analysis on the KPI data points in the cluster to identify a plurality of independent components, each of the plurality of independent components associated with one or more KPIs;
    wherein each of the plurality of sub-groups of KPI data corresponds to an independent component of the plurality of independent components, whereby KPI data of each of the one or more KPIs of the independent component exceed a respective threshold associated with the KPI.

8. The computer implemented method according to any preceding claim, wherein each of the identified failure modes is associated with one or more KPIs.

9. The computer implemented method according to any preceding claim, further comprising supplementing the KPI data with artificially generated KPI data associated with out-of-specification product units.

10. A computer implemented method of classifying product units subject to a process performed by an apparatus, the method comprising:

    receiving the classification model as claimed in any preceding claim to obtain a threshold for each KPI associated with at least one failure mode;
    for each product unit of the product units subject to a process performed by an apparatus:

        determining the likelihood of each of the at least one failure mode based on KPI data of the product unit and the threshold assigned to each KPI associated with the at least one failure mode; and
        performing a classification of the product unit based on the likelihoods of the at least one failure mode.

11. The computer implemented method according to claim 10, wherein the classification of the product unit includes a prediction whether the product unit is in-specification or out-of-specification.

12. The computer implemented method according to claim 11, wherein the classification of the product unit includes a confidence of said prediction.

13. The computer implemented method according to any of claims 10 to 12, wherein performing the classification of the product unit comprises, for each failure mode, comparing the likelihood to a respective predetermined failure mode threshold to determine whether the failure mode predicts the product unit to be out-of-specification.

14. The computer implemented method according to claim 13, wherein if only a single failure mode has a likelihood that exceeds its predetermined failure mode threshold, the classification includes (i) a prediction that the product unit is out-of-specification, and (ii) the one or more KPIs associated with the single failure mode.

15. A non-transitory computer-readable storage medium comprising instructions which, when executed by a processor of a device cause the processor to perform the method of any preceding claim.

FIG. 1

FIG. 2

FIG. 3

FIG. 4

FIG. 5

600

| Receive KPI data | S602 |

↓

| Project the KPI data to a lower dimensional space | S604 |

↓

| Cluster the KPI data to identify a plurality of clusters | S606 |

↓

| Identify a plurality of failure modes | S608 |

↓

| Supplement the KPI data with artificially generated KPI data | S610 |

↓

| For each identified failure mode assign a threshold to each KPI associated with the failure mode | S612 |

↓

| For each of the product units:<br>- determine the likelihood of each of the plurality of failure modes<br>- perform a classification of the product unit based on the likelihoods of each of the plurality of failure modes | S614 |

FIG. 6

700

FIG. 7a

750

FIG. 7b

{ 'cluster 1' : 'No FMs on this cluster',
  'cluster 2' : Counter ({(' KPI_1 ',) : 1}),
  'cluster 3' : Counter ({(' KPI_2 ',) : 1,
  (' KPI_3 ',
  ' KPI_4 ',
  ' KPI_5 ') : 1}),
  'cluster 4' : Counter ({(' KPI_6 ',) : 1}),
  'cluster 5' : 'No FMs on this cluster'}

{ 2 : [' KPI_1 ']
  3 : [' KPI_5 ',
  ' KPI_4 ',
  ' KPI_2 ',
  ' KPI_3 '],
  4 : [' KPI_6 ']}

FIG. 8

FIG. 9a

FIG. 9b

FIG. 9c

FIG. 9d

FIG. 10

FIG. 11a

FIG. 11b          FIG. 11c

FIG. 12

Europäisches
Patentamt

European
Patent Office

Office européen
des brevets

# EUROPEAN SEARCH REPORT

Application Number

EP 22 19 6685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/188584 A1 (RAO ASHOK [US] ET AL) 20 June 2019 (2019-06-20)<br>* paragraph [0010] *<br>* paragraph [0012] *<br>* paragraph [0016] *<br>* paragraph [0026] *<br>* paragraph [0047] *<br>* paragraph [0077] – paragraph [0078] *<br>* paragraph [0102] – paragraph [0103] *<br>* paragraph [0111] *<br>* paragraph [0114] *<br>* paragraph [0118] *<br>————— | 1-15 | INV.<br>G05B19/418 |
| A | WO 2021/160380 A1 (ASML NETHERLANDS BV [NL]) 19 August 2021 (2021-08-19)<br>* paragraph [0050] – paragraph [0052] *<br>* paragraph [0056] *<br>* paragraph [0065] *<br>* paragraph [0073] *<br>* paragraph [0083] *<br>* figure 1 *<br>————— | 1-15 | |

**TECHNICAL FIELDS SEARCHED (IPC)**

G03F
G05B
H01L

The present search report has been drawn up for all claims

| Place of search | Date of completion of the search | Examiner |
|---|---|---|
| Munich | 2 March 2023 | Bianchi, Damiano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 6685

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2023

| Patent document cited in search report | Publication date | Patent family member(s) | Publication date |
|---|---|---|---|
| US 2019188584 A1 | 20-06-2019 | NONE | |
| WO 2021160380 A1 | 19-08-2021 | CN 115104067 A | 23-09-2022 |
| | | EP 4104017 A1 | 21-12-2022 |
| | | KR 20220126761 A | 16-09-2022 |
| | | TW 202144925 A | 01-12-2021 |
| | | WO 2021160380 A1 | 19-08-2021 |

EPO FORM P0459

For more details about this annex : see Official Journal of the European Patent Office, No. 12/82

**EP 4 343 472 A1**

**REFERENCES CITED IN THE DESCRIPTION**

**Patent documents cited in the description**

- US 6952253 B